# FASCICULE DE BREVET EUROPEEN

(11) **EP 0 357 487 B1**
(45) Date de publication et mention de la délivrance du brevet: **20.10.1993**
(21) Numéro de dépôt: 89402288.8
(22) Date de dépôt: 11.08.1989
(51) Int. Cl.: B29C 51/14

(54) **Procédé de thermoformage de feuilles de poly (méthacrylate de méthyle) et les produits façonnés correspondants**
Verfahren zum Warmformen von Folien aus Polymethylmethacrylat und die entsprechend geformten Erzeugnisse
Method of thermally shaping polymethyl methacrylate sheets, and the shaped products

(30) Priorité: 17.08.1988 FR 8810949; 02.12.1988 FR 8815819
(43) Date de publication de la demande: 07.03.1990
(73) Titulaire: ELF ATOCHEM S.A., 92800 Puteaux (FR)
(72) Inventeur: Leca, Jean Paul, F-78200 Mantes La Jolie (FR); Barbin, Jean-Yves, F-27150 Etrepagny (FR)
(74) Mandataire: Rochet, Michel

(56) Documents cités:
- DE-A- 2 337 677
- FR-A- 2 349 425
- FR-A- 2 610 241
- US-A- 2 648 099
- US-A- 3 041 668
- US-A- 4 105 734

## Description

La présente invention concerne un procédé de thermoformage de feuilles de poly(méthacrylate de méthyle) (ou feuilles de PMMA), conduisant à des produits façonnés, en particulier, des coques thermoformées pour appareils sanitaires, tels que baignoires, cuvettes de douche, éviers, etc., le thermoformage étant effectué alors que la feuille de PMMA porte, sur au moins l'une de ses faces, une pellicule protectrice de polymère d'éthylène. Après le thermoformage, cette pellicule est généralement laissée en place pour protéger la surface de PMMA jusqu'au moment de l'utilisation par le consommateur.

Traditionnellement, on protégeait la surface des feuilles thermoplastiques, comme les feuilles de PMMA, pendant leur transport et leur manipulation avant le thermoformage, en collant sur celles-ci des feuilles de papier. Les adhésifs utilisés à cet effet étaient généralement des adhésifs solubles dans l'eau, appliqués sous forme de solutions. Toutefois, il était nécessaire d'appliquer très uniformément ces adhésifs à la surface de la feuille.

Une telle application d'adhésif étant assez difficile à mettre en oeuvre à l'échelle industrielle, on a alors proposé de remplacer le papier par une pellicule de polymère d'éthylène, ce qui supprimait l'emploi de l'adhésif. Dans le cas de la protection des feuilles coulées de PMMA, la pellicule de polymère d'éthylène est appliquée à l'aide de cylindres chauds. Toutefois, lorsque la feuille de PMMA est débarrassée de sa pellicule de polymère d'éthylène avant le thermoformage, la charge statique importante présente sur les feuilles apporte les inconvénients que les personnes manipulant ces feuilles peuvent être soumises à un choc électrique, et également, que la poussière est plus fortement attirée au contact des feuilles.

Pour remédier à ces inconvénients, il a été proposé, conformément au brevet français n^{o} 2 349 425, de conserver la protection de polyéthylène sur la feuille de PMMA pendant le thermoformage. On obtient parallèlement l'avantage complémentaire de conserver cette même protection sur le produit façonné, alors que, dans bien des cas, et notamment dans celui des produits destinés à constituer des appareils sanitaires, il était indispensable d'appliquer un nouveau revêtement protecteur, en raison des nombreuses manipulations restant encore à faire avant la pose de l'appareil chez le consommateur.

Ce procédé connu concerne donc le thermoformage d'une feuille de PMMA, définie comme présentant une viscosité réduite d'au moins 1,5, et, de préférence, d'au moins 3,0, telle que déterminée à 25°C sur une solution dans le chloroforme contenant 1 g du polymère dans 1000 cm³ de solution, ladite feuille de PMMA étant protégée, sur au moins l'une de ses surfaces, par une pellicule, en contact intime avec elle, d'un polyéthylène ayant subi un traitement par décharge Corona (ou traitement Corona) au moins sur la face adhérant à la feuille de PMMA. Conformément à ce procédé connu, on chauffe la feuille de PMMA ainsi protégée à une température d'au moins 140°C, jusqu'à ce qu'elle soit ramollie par la chaleur, mais pas suffisamment longtemps pour que la feuille soit endommagée par des modifications induites dans le polyéthylène par le traitement thermique subi, puis on déforme l'ensemble, constitué par la feuille et sa protection, jusqu'à obtenir la forme finale voulue, le polyéthylène étant toujours en contact intime avec la feuille. Conformément à ce brevet, il est préconisé d'utiliser une pellicule de polyéthylène ayant un indice de fluidité à l'état fondu, déterminé suivant la norme ASTM 1238-70, allant de 1 à 4, la préférence allant à la plage de 2 à 3 g/10 min.

En dehors des conditions qu'elle doit remplir pour pouvoir être mise en oeuvre dans le procédé indiqué ci-dessus et qui résultent parfois d'un compromis pour satisfaire les exigences, à la fois de protection de la feuille de PMMA, d'adhérence provisoire et de thermoformage, la pellicule de polymère d'éthylène doit, après le thermoformage, pouvoir conserver son intégrité d'aspect et de couleur jusqu'au moment où elle sera retirée ; et elle doit à ce moment pouvoir être retirée facilement même après stockage prolongé, et, une fois retirée, elle ne doit pas avoir laissé de traces, ni avoir induit des microdéformations parasites (microcratères) sur la feuille de PMMA.

La société déposante a donc cherché à améliorer le procédé connu, notamment dans le but d'assurer une meilleure protection de la feuille de poly(méthacrylate de méthyle) par une pellicule de polymère d'éthylène.

La présente invention a donc d'abord pour objet un procédé de thermoformage d'une feuille de poly(méthacrylate de méthyle PMMA) présentant une viscosité réduite d'au moins 1,5 ml/g, protégée, sur au moins l'une de ses faces, par une pellicule, en contact intime avec elle, d'un polymère d'éthylène ayant subi un traitement par décharge Corona,au moins sur sa face adhérant à la feuille de PMMA, ce procédé consistant à chauffer la feuille de PMMA portant ladite pellicule protectrice à une température d'au moins 140°C jusqu'à ce que la feuille de PMMA se trouve dans un état ramolli approprié au thermoformage, sans que s'ensuive une modification de la nature de la pellicule protectrice entrainant une dégradation de la surface de la feuille de PMMA, caractérisée par le fait qu'on utilise une pellicule protectrice de polymère d'éthylène de densité ne dépassant pas 0,935 et ayant un indice de fluidité inférieur à 1,0 g/10 min.

On peut utiliser une pellicule de polymère d'éthylène ayant été revêtue par une couche d'adhésif acrylique après avoir subi le traitement Corona.

On entend ici par "feuille de PMMA", une feuille dont au moins la surface qui constituera la surface exposée du produit fini, est constituée par un homopolymère de méthacrylate de méthyle ou par un copolymère de méthacrylate de méthyle contenant une proportion majeure, notamment d'au moins 90 % en moles, d'unités de méthacrylate de méthyle.

Le terme «polymère d'éthylène» englobe, en dehors des homopolymères, également les copolymères de l'éthylène avec des quantités mineures de monomères copolymérisables, quantités qui sont insuffisantes pour induire toute différence majeure des propriétés physiques entre le copolymère et l'homopolymère. Ainsi, le polymère d'éthylène peut contenir des proportions mineures, en particulier inférieures à 5% environ en poids, de monomères tels que l'acétate de vinyle ou des acrylates et méthacrylates d'alkyle dont le groupe alkyle a de 1 à 12 atomes de carbone. En pratique, on déterminera si un polymère d'éthylène est utilisable si, après thermoformage d'un ensemble comprenant la feuille et la pellicule du polymère d'éthylène, on peut retirer facilement la pellicule après le thermoformage, sans laisser de traces de pellicule sur le produit façonné.

La densité du polymère d'éthylène est ici déterminée selon la norme ISO R 1183, et son indice de fluidité à l'état fondu, selon la norme ISO 1133.

On choisit donc, selon l'invention, une pellicule d'un polymère d'éthylène dont la densité ne dépasse pas 0,935, et, notamment, est supérieure ou égale à 0,910 environ. Une plage de densité préférée est la plage de 0,915-0,925. Si l'on utilisait une pellicule d'un polymère d'éthylène de densité supérieure à 0,935, on devrait, lors de la pose de cette pellicule sur la feuille de PMMA, chauffer l'interface à une température supérieure à 90°C environ, c'est-à-dire à une température incompatible avec le respect de la qualité de surface du PMMA. En revanche, si l'on utilise une pellicule d'un polymère d'éthylène de densité inférieure à 0,910, on peut craindre que cette pellicule ne présente un caractère légèrement collant ou poisseux à froid, risquant de conduire à une séparation des pellicules de polymère d'éthylène dans le cas où des feuilles de PMMA protégées par leurs pellicules de polymère d'éthylène seraient empilées les unes sur les autres pour le stockage.

Par ailleurs, selon l'invention, on utilise une pellicule d'un polymère d'éthylène dont l'indice de fluidité (IF) est inférieur à 1,0 g/10 min, et se situe notamment dans la plage allant d'environ 0,5 à environ 0,9 g/10 min. Le choix d'un polymère d'éthylène présentant un IF supérieur à 1, c'est-à-dire d'un polymère d'éthylène ayant une masse moléculaire plus faible, imposerait, en raison de la faible résistance mécanique de la pellicule correspondante, d'utiliser une pellicule de polymère d'éthylène d'épaisseur élevée, ce qui risquerait d'être incompatible avec l'obtention d'un caractère adhésif convenable. Egalement, le choix d'un polymère d'éthylène présentant un IF trop faible (inférieur à 0,5 g/10 min), c'est-à-dire d'un polymère d'éthylène ayant une masse moléculaire très élevée, rendrait difficile à la fois la pose de la pellicule de polymère d'éthylène sur la feuille de PMMA et le thermoformage, par suite d'une trop grande rigidité ou trop grand module en flexion de la pellicule.

La pellicule de polymère d'éthylène utilisée dans le procédé de l'invention a subi un traitement Corona ayant conduit à une tension superficielle de la pellicule de polymère d'éthylène de préfèrence supérieure à environ 4 x 10⁻²N/m mais inférieure à environ 4,4 x 10⁻²N/m, ce, dans le cas où la pellicule de polymère d'éthylène est utilisée telle quelle. Si la tension superficielle de la pellicule de polymère d'éthylène était inférieure à 4 x 10⁻²N/m, il ne serait pas possible de faire adhérer cette pellicule sur la feuille de PMMA, sauf à procéder à une température d'au moins 115°C, ce qui est tout à fait incompatible avec la conservation de la qualité de surface de la feuille. En revanche, si cette tension superficielle était supérieure à 4,4 x 10⁻²N/m, même en appliquant la pellicule sur la feuille à une température inférieure à 80°C et à une presion non excessive, la pellicule serait inarrachable après thermoformage, car trop collante.

Dans le cas où la pellicule de polymère d'éthylène est utilisée en étant revêtue par l'adhésif acrylique, il sera souhaitable que le traitement Corona soit tel qu'il ait conduit à une tension superficielle de la pellicule de polymère d'éthylène qui soit supérieure à 4,4 x 10⁻²N/m, afin que la couche d'adhésif soit toujours maintenue en liaison avec la pellicule de polymère d'éthylène et qu'il ne se produise pas de transfert sur la feuille de PMMA.

Par ailleurs, dans le cas où elle est utilisée telle quelle après traitement Corona, la pellicule de polymère d'éthylène présente une épaisseur généralement comprise entre 25 et 80 µm. Il serait très difficile d'appliquer, sur la feuille de PMMA, une pellicule de polymère d'éthylène d'épaisseur supérieure à 80 µm, car elle manquerait de souplesse du fait de son faible indice de fluidité. Ce faible indice de fluidité permet toutefois d'utiliser une pellicule d'épaisseur aussi faible que 25 µm.

Dans le cas où la pellicule de polymère d'éthylène est rendue adhésive par la couche d'adhésif acrylique, son épaisseur être comprise entre 25 et 120 µm environ, en vue d'une protection renforcée, utile par exemple pour des produits thermoformés de plus grande valeur, ou si le PMMA à protéger est à surface dépolie ou granitée, ainsi que dans le cas où l'on souhaite pouvoir recoller après l'avoir décollée la pellicule de polymère d'éthylène sur l'article thermoformé.

Dans le cas où l'on utilise une pellicule de polymère d'éthylène revêtue par une couche d'adhésif, ce dernier est avantageusement choisi parmi les polyacrylates ayant un point de transition vitreuse inférieur à -20°C environ, notamment les polyacrylates d'alkyle en C₄-C₁₂, comme, par exemple, le poly(acrylate de butyle), le poly(acrylate d'éthyl-2 hexyle) (AE2H), le poly(acrylate de 3,3,5-triméthylhexyle). De tels adhésifs conviennent bien, car, de part leur caractère élastomère, ils sont faciles à appliquer sur la feuille de polymère d'éthylène ayant subi le traitement Corona, à l'état d'émulsions aqueuses à 30-40% environ en poids, de matières sèches, en une couche d'épaisseur inférieure à 10 µm, par exemple de l'ordre de 5 µm, et ils sont stables dans les conditions de température du thermoformage.

La pellicule de polymère d'éthylène peut être appliquée sur la feuille de PMMA par différents procédés au cours desquels de la chaleur est apportée, soit à l'une, soit à l'autre, pour qu'au moment où la pression est exercée sur l'ensemble feuille/pellicule, le polymère d'éthylène soit ramolli en vue d'une bonne adhérence à la feuille. Ainsi, on peut citer le cas où des cylindres, se trouvant à une température d'environ 80°C, sont appliqués avec une pression suffisante et pendant un temps suffisant pour faire adhérer la pellicule de polymère d'éthylène sur la feuille de PMMA, la pellicule et la feuille étant amenées toutes deux aux cylindres à la température ambiante.

Par ailleurs, il peut être parfois utile, pour réduire l'importance de la charge statique éventuellement présente lorsque la pellicule protectrice est ultérieurement détachée du produit façonné, d'utiliser une feuille de PMMA sur laquelle on a appliqué une couche conductrice de l'électricité, avant l'application de la pellicule de polymère d'éthylène. Les matières appropriées pour constituer de telles couches conductrices sont les agents tensio-actifs cationiques hydrosolubles, tels que les bromures d'alkyl-pyridinium, en solutions aqueuses, lesquelles sont appliquées aisément sur la feuille de PMMA et séchées avant l'application de la pellicule de polymère d'éthylène.

Conformément à un procédé de thermoformage préféré, on chauffe une feuille de PMMA portant sa couche protectrice adhérente de polymère d'éthylène jusqu'à au moins 140°C, de préférence jusqu'à au moins 150°C, par exemple jusqu'à 200°C. Le chauffage est conduit dans un appareil classique, comme une étuve à air ou un appareil de chauffage infra-rouge, jusqu'à ce la feuille se trouve dans un état approprié pour le thermoformage, puis on écarte cette dernière de la source de chaleur, avant que des modifications de la nature du polymère d'éthylène induisent une dégradation de la surface de la feuille.

Pour obtenir un produit satisfaisant, il est nécessaire que le cycle de chauffage exerce un traitement thermique suffisant pour permettre que la feuille subisse le thermoformage, mais sans que le contact intime entre la pellicule de polymère d'éthylène et la feuille de PMMA ne soit interrompu et entraîne des dégradations superficielles ou que le polymère d'éthylène vienne adhérer trop fermement à la feuille, ou qu'il subisse une modification de nature rendant impossible de le détacher proprement de la feuille après le refroidissement jusqu'à la température ambiante.

On procède ensuite au thermoformage par déformation de la feuille ramollie en même temps que de la couche adhérente de polymère d'éthylène jusqu'au moment où la surface non-protégée vient en contact avec une surface de moulage ayant la forme désirée, ou par pressage d'un outil chaud ayant la forme désirée contre la surface non protégée de la feuille jusqu'au moment où celle-ci a pris la forme souhaitée.

Les feuilles peuvent ainsi être déformées pour constituer le produit façonné suivant les divers procédés classiques, par exemple l'entretien d'une dépression ou d'une pression déformant la feuille sans contact avec les surfaces de moulage, ou bien l'exercice d'une pression ou d'une dépression pour souffler ou appliquer la feuille sur une surface de moulage.

La couche protectrice de polymère d'éthylène reste en place tout au long du thermoformage et elle est détachée par la suite au moment voulu, entre le moment où le produit façonné se refroidit et le moment de l'utilisation finale de ce produit.

L'invention porte également sur le produit façonné en PMMA ayant une viscosité reduite d'au moins 1,5, protégé, sur au moins l'une de ses faces, par une pellicule, en contact intime avec lui, d'un polymère d'éthylène ayant subi un traitement par décharge Corona, caractérisé par le fait que la pellicule protectrice de polymère d'éthylène a une densité ne dépassant pas 0,935 et a un indice de fluidité inférieur à 1,0 g/10 min.

Pour mieux illustrer l'objet de la présente invention, on en décrira plus en détail ci-après plusieurs exemples de réalisation.

### Exemple 1 :

La feuille de PMMA utilisée est une feuille de PMMA de qualité sanitaire (selon norme européenne EN 198 (CEN-TC 86, janvier 1986)), obtenue par polymérisation par coulée, ayant une viscosité réduite supérieure à 4, et une épaisseur de 5 mm.

La pellicule protectrice de polymère d'éthylène utilisée est une pellicule d'un polyéthylène commercialisé par la Société NORSOLOR sous la dénomination Lotréne FB 7000 (IF : 0,7 g/10 min ; densité : 0,921), ayant une épaisseur de 70 µm et ayant subi un traitement Corona qui a conduit à une tension superficielle de polyéthylène de 4,2 x 10⁻²N/m.

On fait passer en continu la pellicule de polyéthylène, qui est déroulée à partir d'un rouleau d'alimentation, sur un cylindre chauffant qui est régulé en température pour porter la pellicule à 60-80°C. On applique alors la pellicule sur une face de la feuille de PMMA déplacée également en continu, par l'intermédiaire d'un rouleau presseur métallique à revêtement de caoutchouc, qui fait adhérer la pellicule à la feuille et réalise le débullage à l'interface.

Un dispositif identique est prévu pour appliquer une même pellicule de polyéthylène sur l'autre face de la feuille. Les pellicules présentent une adhérence sur la feuille qui est de 0,4 N/cm environ.

Le composite pellicule/feuille/pellicule est stocké puis transporté sur le lieu de thermoformage sans que l'on observe de décollement des pellicules.

Pour obtenir par thermoformage, une coque de baignoire par exemple, on commence par enlever l'une des pellicules et on soumet le composite feuille/pellicule ainsi obtenu à un chauffage, en position horizontale, la pellicule de polyéthylène étant tournée vers le haut, dans une étuve à air chauffée à une température de 180°C, pendant environ 20 minutes.

On transporte le composite chauffé dans une chambre de moulage par dépression, où l'on adapte la feuille sur le contour du moule de la coque de baignoire. On fait le vide de telle sorte que la surface non protégée de la feuille vienne en contact avec la surface du moule.

Après refroidissement, on retire le composite thermoformé. La pellicule de protection présente une adhérence à la feuille de PMMA de 0,6 N/cm de bande. Elle n'est retirée que plus tard : elle se détache alors aisément, laissant une surface de PMMA sans aucun défaut.

### Exemple 2 :

On procède comme à l'exemple 1, excepté que l'on utilise une feuille de PMMA de qualité sanitaire comportant une face dépolie, et comme pellicule de protection restant sur la feuille lors du thermoformage, une pellicule d'un polyéthylène commercialisé par la Société NORSOLOR sous la dénomination Lotrene FB 8 000 (IF : 0,8 g/10 min ; densité : 0,924), d'une épaisseur de 80 µm, ayant subi un traitement Corona qui a conduit à une tension superficielle de 4,6 x 10⁻²N/m, et ayant été revêtu, sur sa face ainsi traitée, par une couche adhésive de 6 µm d'un poly(acrylate d'éthyl-2 hexyle). Cette pellicule de polyéthylène est appliquée sur la face dépolie de la feuille de PMMA.

La couche adhésive permet d'assurer une excellente adhérence de la pellicule de polyéthylène à la feuille de PMMA, et lors du retrait de ladite pellicule, qui s'effectue également sans difficulté, la surface du PMMA apparaît sans aucun défaut.

## Revendications

1. Procédé de thermoformage d'une feuille de poly(méthacrylate de méthyle) (PMMA) présentant une viscosité réduite d'au moins 1,5ml/g, protégée, sur au moins l'une de ses faces, par une pellicule, en contact intime avec elle, d'un polymère d'éthylène ayant subi un traitement par décharge Corona au moins sur sa face adhérant à la feuille de PMMA, ce procédé consistant à chauffer la feuille de PMMA portant ladite pellicule protectrice à une température d'au moins 140°C jusqu'à ce que la feuille de PMMA se trouve dans un état ramolli approprié au thermoformage, sans que s'ensuive une modification de la nature de la pellicule protectrice entrainant une dégradation de la surface de la feuille de PMMA, caractérisée par le fait qu'on utilise une pellicule protectrice de polymère d'éthylène de densité ne dépassant pas 0,935 et ayant un indice de fluidité inférieur à 1,0 g/10 min.

2. Procédé selon la revendication 1, caractérisé par le fait qu'on choisit une pellicule de polymère d'éthylène présentant une densité supérieure ou égale à 0,910.

3. Procédé selon l'une des revendications 1 et 2, caractérisé par le fait qu'on choisit un polymère d'éthylène présentant un indice de fluidité compris entre 0,5 et 0,9 g/10 min.

4. Procédé selon l'une des revendications 1 à 3, caractérisé par le fait que la pellicule de polymère d'éthylène a subi un traitement Corona ayant conduit à une tension superficielle du polymère d'éthylène supérieure à 4 x 10⁻²N/m, mais inférieure à 4,4 x 10⁻²N/m.

5. Procédé selon l'une des revendications 1 à 4, caractérisé par le fait qu'on choisit une pellicule de polymère d'éthylène ayant une épaisseur comprise entre 25 et 80 µm dans le cas où elle est utilisée telle quelle.

6. Procédé selon l'une des revendications 1 à 3, caractérisé par le fait qu'on utilise une pellicule de polymère d'éthylène ayant été revêtue par une couche d'adhésif acrylique après avoir subi le traitement Corona.

7. Procédé selon la revendication 6, caractérisé par le fait que l'adhésif acrylique est choisi parmi les polyacrylates d'alkyle en C₄ - C₁₂.

8. Procédé selon l'une des revendications 6 et 7, caractérisé par le fait que la pellicule de polymère d'éthylène a subi un traitement Corona ayant conduit à une tension superficielle du polymère d'éthylène supérieure à 4,4 x 10⁻²N/m et présente une épaisseur comprise entre 25 et 120 µm.

9. Produit façonné en poly(méthacrylate de méthyle) ayant une viscosité réduite d'au moins 1,5ml/g, protégée, sur au moins l'une de ses faces, par une pellicule, en contact intime avec lui, d'un polymère d'éthylène ayant subi un traitement par décharge Corona au moins sur sa face adhérant à la feuille de PMMA, caractérisé par le fait que la pellicule protectrice de polymère d'éthylène a une densité ne dépassant pas 0,935 et a un indice de fluidité inférieur à 1,0 g/10 min.

10. Produit façonné selon la revendication 9, caractérisé par le fait qu'il consiste en une coque thermoformée pour appareils sanitaires.

## Claims

1. Process for thermoforming a sheet of poly(methyl methacrylate) (PMMA) exhibiting a reduced viscosity of at least 1.5 ml/g, protected on at least one of its faces by a film, in intimate contact therewith, of an ethylene polymer which has undergone a treatment using a corona discharge at least on its face adhering to the PMMA sheet, this process consisting in heating the PMMA sheet bearing the said protective film to a temperature of at least 140°C until the PMMA sheet is in a softened state which is appropriate to the thermoforming, without any subsequent modification in the nature of the protective film entailing a degradation of the surface of the PMMA sheet, characterised in that a protective film of relative density not exceeding 0.935 and with a melt index lower than 1.0 g/10 min is employed.

2. Process according to Claim 1, characterised in that a film of ethylene polymer which exhibits a relative density higher than or equal to 0.910 is chosen.

3. Process according to either of Claims 1 and 2, characterised in that an ethylene polymer exhibiting a melt index of between 0.5 and 0.9 g/10 min is chosen.

4. Process according to one of Claims 1 to 3, characterised in that the ethylene polymer film has undergone a corona treatment which has resulted in a surface tension of the ethylene polymer which is higher than 4 x 10⁻² N/m, but lower than 4.4 x 10⁻² N/m.

5. Process according to one of Claims 1 to 4, characterised in that an ethylene polymer film is chosen which has a thickness of between 25 and 80 µm in the case where it is employed as it is.

6. Process according to one of Claims 1 to 3, characterised in that an ethylene polymer film is employed which has been coated with a layer of acrylic adhesive after having undergone the corona treatment.

7. Process according to Claim 6, characterised in that the acrylic adhesive is chosen from poly(C₄-C₁₂-alkyl acrylates).

8. Process according to either of Claims 6 and 7, characterised in that the ethylene polymer film has undergone a corona treatment which has resulted in a surface tension of the ethylene polymer which is higher than 4.4 x 10⁻²N/m and has a thickness of between 25 and 120 µm.

9. Moulded product made of poly(methyl methacrylate) which has a reduced viscosity of at least 1.5 ml/g, protected on at least one of its faces by a film, in intimate contact therewith, of an ethylene polymer which has undergone a treatment using a corona discharge at least on its face adhering to the PMMA sheet, characterised in that the protective ethylene polymer film has a relative density not exceeding 0.935 and has a melt index lower than 1.0 g/10 min.

10. Moulded product according to Claim 9, characterised in that it consists of a thermoformed shell for sanitary ware.

## Patentansprüche

1. Verfahren zum Warmformen einer Tafel aus Polymethylmethacrylat (PMMA) mit einer reduzierten Viskosität von mindestens 1,5 ml/g, die mindestens einseitig durch einen eng anliegenden Polyethylenfilm geschützt ist, welcher mindestens auf der Seite, die auf der PMMA-Tafel haftet, durch eine Corona-Entladung behandelt wurde, wobei dieses Verfahren darin besteht, daß die den besagten Schutzfilm tragende PMMA-Tafel auf eine Temperatur von mindestens 140°C erhitzt wird, bis die PMMA-Tafel einen für die Thermoformierung geeigneten erweichten Zustand erreicht hat, ohne daß dies eine Zersetzung der Oberfläche der PMMA-Tafel mit sich bringt, dadurch gekennzeichnet, daß ein Schutzfilm aus einem Polyethylen verwendet wird, dessen Dichte 0,935 nicht übersteigt, und dessen Flußindex geringer als 1,0 g/10 min. ist.

2. Verfahren nach Anspruch 1, dadurch gekennzeichnet, daß ein Film aus Polyethylen gewählt wird, dessen Dichte größer oder gleich 0,910 ist.

3. Verfahren nach einem der Ansprüche 1 und 2, dadurch gekennzeichnet, daß ein Polyethylen ausgewählt wird, das einen Flußindex zwischen 0,5 und 0,9 g/10 min. aufweist.

4. Verfahren nach einem der Ansprüche 1 bis 3, dadurch gekennzeichnet, daß der Film aus Polyethylen einer Corona-Behandlung unterworfen wurde, die zu einer Oberflächenspannung des Polyethylens führt, die größer als 4 x 10⁻² N/m ist.

5. Verfahren nach einem der Ansprüche 1 bis 4, dadurch gekennzeichnet, daß ein Film aus Polyethylen ausgewählt wird, der eine Dicke zwischen 25 und 80 µm aufweist, wenn er unbehandelt Verwendung findet.

6. Verfahren nach einem der Ansprüche 1 bis 3, dadurch gekennzeichnet, daß ein Film aus Polyethylen verwendet wird, der im Anschluß an die Corona-Behandlung mit einer Schicht Acrylatklebstoff bedeckt wurde.

7. Verfahren nach Anspruch 6, dadurch gekennzeichnet, daß der Acrylatklebstoff unter den Poly-(C₄-C₁₂)-Alkyl-acrylaten ausgewählt wird.

8. Verfahren nach einem der Ansprüche 6 und 7, dadurch gekennzeichnet, daß der Film aus Polyethylen einer Corona-Behandlung unterworfen wird, die zu einer Oberflächenspannung von mehr als 4,4 x 10⁻² N/m und zu einer Filmdicke zwischen 25 und 120 µm führt.

9. Formteil hergestellt aus Polymethylmethacrylat mit einer reduzierten Viskosität von mindestens 1,5 ml/g, das mindestens einseitig durch einen eng anliegenden Film aus Polyethylen geschützt ist, der mindestens auf der Seite, die auf der PMMA-Tafel haftet, einer Corona-Entladung unterworfen wurde, dadurch gekennzeichnet, daß der Schutzfilm aus Polyethylen eine geringere Dichte als 0,935 und einen geringeren Flußindex als 1,0 g/10 min. aufweist.

10. Formteil nach Anspruch 9, dadurch gekennzeichnet, daß es eine warmgeformte Schale für sanitäre Geräte darstellt.
